(19) Europäisches Patentamt
European Patent Office
Office européen des brevets

(11) **EP 0 971 256 B1**

(12) **EUROPÄISCHE PATENTSCHRIFT**

(45) Veröffentlichungstag und Bekanntmachung des Hinweises auf die Patenterteilung:
**24.04.2002 Patentblatt 2002/17**

(51) Int Cl.⁷: $G02F\ 1/035$, $H04B\ 10/142$

(21) Anmeldenummer: **99112919.8**

(22) Anmeldetag: **05.07.1999**

(54) **Verfahren und Vorrichtung zur qualitativen Bewertung von integriert-optischen Phasenmodulatoren**

Process and device for the qualitative assessment of integrated optical phase modulator

Procédé et dispositif pour le test qualitatif de modulateur de phase optique intégré

(84) Benannte Vertragsstaaten:
FR GB IT

(30) Priorität: **10.07.1998 DE 19830924**
**09.09.1998 DE 19841044**

(43) Veröffentlichungstag der Anmeldung:
**12.01.2000 Patentblatt 2000/02**

(73) Patentinhaber: **Deutsches Zentrum für Luft- und Raumfahrt e.V.**
**53175 Bonn (DE)**

(72) Erfinder: **Giggenbach, Dirk**
**80687 München (DE)**

(74) Vertreter: **von Kirschbaum, Albrecht, Dipl.-Ing.**
**Patentanwalt**
**Postfach 1520**
**82102 Germering (DE)**

(56) Entgegenhaltungen:
- JUNGERMAN R L ET AL: "FREQUENCY DOMAIN OPTICAL NETWORK ANALYSIS USING INTEGRATED OPTICS" IEEE JOURNAL OF QUANTUM ELECTRONICS,US,IEEE INC. NEW YORK, Bd. 27, Nr. 3, 1. März 1991 (1991-03-01), Seiten 580-587, XP000227551 ISSN: 0018-9197
- MCMURRAY J A ET AL: "Assessment of thin film modulator performance by homodyne detection of optical phase change" JOURNAL OF PHYSICS E (SCIENTIFIC INSTRUMENTS), APRIL 1976, UK, Bd. 9, Nr. 4, Seiten 317-319, XP000892077 ISSN: 0022-3735
- YICHENG LU ET AL: "A study of effects of phase modulator characteristics on interferometer system performance" EUROPEAN WORKSHOP ON OPTICAL FIBRE SENSORS, PEEBLES, UK, 8-10 JULY 1998, Bd. 3483, Seiten 146-150, XP000909060 Proceedings of the SPIE - The International Society for Optical Engineering, 1998, SPIE-Int. Soc. Opt. Eng, USA ISSN: 0277-786X

**Beschreibung**

Die Erfindung bezieht sich auf ein Verfahren zur qualitativen Bewertung der Abhängigkeit des optischen Phasenhubs einer einen integriert-optischen Phasenmodulator (IOPM) passierenden Lichtwelle von der Ansteuerfrequenz und der Ansteuerspannung eines elektrischen Modulationssignals, das an ein Elektrodenpaar des durch einen optischen Kristall gebildeten, integriert-optischen Phasenmodulators angelegt wird, in den die von einer Laser-Strahlquelle über Lichtwellenleiter herangeführte Lichtwelle zur Phasenmodulation eingekoppelt wird.

Außerdem betrifft die Erfindung eine Vorrichtung zur Durchführung des Verfahrens.

Ein integriert-optischer Phasenmodulator ist eine Komponente der optischen Lichtwellenleiter-Nachrichtentechnik, welche dazu dient, die Phase einer hindurchgehenden Lichtwelle mittels des im folgenden kurz beschriebenen Mechanismus zu ändern.

Das zu modulierende Licht stammt zumeist von einem Laser beliebiger Bauart dessen Strahlung in einen durch eine Monomodefaser gebildeten Lichtwellenleiter eingekoppelt wird. Diese Lichtwelle wird im Lichtwellenleiter an den integriert-optischen Phasenmodulator herangeführt, was bei bestimmten, polarisierenden Bauarten von integriert-optischen Phasenmodulatoren üblicherweise mit einer polarisationserhaltenden Monomodefaser erfolgt. Dies wird dann in einen optischen Kristall, zumeist aus Lithium-Niobat, eingekoppelt, in welchen ein Wellenleiterprofil eingearbeitet ist, um die Lichtwelle, vergleichbar wie in der Glasfaser, hindurch zu leiten.

Auf diesen Wellenleiter kann nun über zwei auf dem optischen Kristall aufgebrachte Elektroden ein elektrisches Feld angelegt werden. Dieses führt dann zu einer lokalen Brechungsindexänderung des optischen Kristalls. Da die Ausbreitungsgeschwindigkeit des Lichtes indirekt proportional mit dem Brechungsindex des Ausbreitungsmediums zusammenhängt, ändert sich damit die Laufzeit der Lichtwelle durch den optischen Kristall und folglich auch ihre Phasenlage. Nach dem optischen Kristall folgt wieder eine Einkopplung in eine Monomodefaser.

Ein integriert-optischer Phasenmodulator wird immer für eine bestimmte Wellenlänge ausgelegt, um eine optimale Führung der Lichtwelle im Wellenleiterprofil und in den ab- und zuführenden Lichtwellenleitern zu erreichen. Bezüglich der genauen Funktionsweise eines integriert-optischen Phasenmodulators wird auf die Literaturstelle von Dr. Ing. W.-H. Rech: "Ein frequenzstabiler optischer Mehrkanalsender", VDI Verlag, Reihe 9: Elektronik, Nr. 118, Seiten 18 bis 34 hingewiesen.

Mit diesen Komponenten können bei den in der optischen Nachrichtentechnik üblichen Wellenlängen zwischen 800 nm und 1500 nm Phasenverschiebungen von mehreren Wellenlängen erreicht werden, was mehreren 2*$\pi$ Phasenhub entspricht. Die notwendigen Ansteuerspannungen für einen Phasenhub von 180°, die sogenannte Vn-Spannung, liegen dabei je nach Bauart, Ansteuerfrequenz und Lichtwellenlänge etwa zwischen 4 V und 14 V.

Dabei wird in kohärent-optischen digitalen Übertragungssystemen zumeist ein Phasenhub von exakt 180° angestrebt, da sich damit die beste Übertragungsqualität realisieren läßt, vgl. dazu die diesbezüglichen Ausführungen in "Coherent Optical Communication Systems" von S. Betti, G. De Marchis, E. Iannone, Verlag John Wiley & Sons, S. 148 bis 155 und S. 254 bis 259. Es ist daher von äußerster Wichtigkeit, das Verhältnis zwischen Ansteuerspannung und damit erreichtem Phasenhub zu kennen.

Dieser Phasenhub ist dabei zusätzlich frequenzabhängig, und zwar ergibt sich in etwa ein Tiefpaßverhalten, d.h. je größer die Ansteuerfrequenz (bzw. die Datenrate des zu übertragenden Digitalsignals) bemessen ist, um so geringer wird der Phasenhub bei konstanter Ansteueramplitude, womit die Übertragungsqualität abnimmt.

Die Hersteller von integriert-optischen Phasenmodulatoren messen zur Qualitätskontrolle nicht direkt den Frequenzgang des Phasenhubs oder die für 180° nötige Ansteuerspannung, sondern sie kontrollieren diese mittels eines im gleichen Produktionsverfahren gebauten integriert-optischen Intensitätsmodulators nach der sogenannten Mach-Zehnder Bauweise. Ein solcher Mach-Zehnder-Aufbau enthält zwei Phasenmodulatoren.

Indem die Funktionstüchtigkeit dieser Komponente nachgewiesen wird, was auf sehr einfache Weise geschieht, wird auch der im gleichen Produktionszyklus hergestellte integriert-optische Phasenmodulator als funktionstüchtig angesehen. Es finden zwar beim endgültigen Zusammenbau des integriert-optischen Phasenmodulators noch verschieden Tests statt, jedoch wird die Qualität der Phasenmodulation niemals direkt überprüft.

Es hat sich gezeigt, daß dadurch des öfteren integriert-optische Phasenmodulatoren ausgeliefert werden, welche nicht die geforderten technischen Werte erfüllen oder sogar völlig unbrauchbar sind, ohne daß dies vom Hersteller in der Endkontrolle erkannt werden konnte.

Aus DE 40 19 447 A1 ist ein Verfahren zum Abgleich des Modulationshubes von elektro-optischen Phasenmodulatoren bekannt. Hierbei wird zum Abgleich des Modulationshubs eine der zum Modulator gehörenden Elektroden in eine Reihe kleiner Segmente aufgeteilt, die zunächst alle mit einer genormten Modulationsspannung verbunden werden. Zum Abgleich werden dann soviele Segmente von der Modulationsspannung getrennt, bis der gewünschte Modulationshub erreicht ist.

Ferner ist aus EP 358 532 A2 unter anderem ein Verfahren zum Ansteuern eines integrierten optischen Phasenmodulators bekannt. Es wird eine Ladung mit sich ändernden Raten entsprechend der Größe eines die Laderate steuernden Signals an dem integrierten optischen Phasenmodulator vorgesehen, so daß die Kapazitanz des Phasenmodulators die Ladung speichert. Die durch die Kapazitanz gespeicherte Ladung wird durch eine Spannung an der Kapazitanz überwacht. Anschließend wird die Größe der Spannung mit der Größe der ausgewählten Spannung verglichen, und die gespeicherte Ladung wird entladen, sobald festgestellt wird, daß die Ladungsmenge die Größe der gewählten Spannung überschreitet.

In McMurray J.A. et al: "Assessment of thin film modulator performance by homodyne detection of optical phase change" JOURNAL OF PHYSICS E (SCIENTIFIC INSTRUMENTS), APRIL 1976, UK, Bd. 9, Nr. 4 Stn. 317 bis 319 ist eine Meßanordnung für Freistrahl-Dünnfilm-Phasenmodulatoren beschrieben. Hierbei wird das modulierte Licht im Freistrahl mit einem Teil des vorher abgezweigten unmodulierten Lichts von der gleichen Laserquelle überlagert; somit ist ein Selbsthomodyn-Empfänger realisiert. Die Messung der Vpi-Modulationsspannung erfolgt durch Beobachtung des detektierten Überlagerungssignals und Vpi ist erreicht, wenn ein sauberer Schwingungsverlauf auf dem Oszilloskop zu beobachten ist.

Bei dieser Meßanordnung findet zur Vermeidung einer Offset-Drift keine Regelung statt. Daher eignet sich die bekannte Meßanordnung auch nicht für integriert-optische Phasenmodulatoren, da bei diesen stets die erwähnte zufällige Offset-Drift vorhanden ist.

Der Erfindung liegt die Aufgabe zugrunde, ein Verfahren und eine Vorrichtung zu schaffen, womit sich eine direkte Messung und damit Kontrolle der Qualität der Phasenmodulation von integriert-optischen Phasenmodulatoren durchführen läßt, so daß eine Auslieferung und ein späterer Einsatz von nicht die geforderten technischen Werte erfüllenden oder sogar völlig unbrauchbaren integriert-optischen Phasenmodulatoren in sicherer und zuverlässiger Weise verhindert werden.

Gemäß der Erfindung wird diese gestellte Aufgabe bei einem Verfahren der eingangs genannten Art dadurch gelöst, daß zur direkten Messung des Frequenzgangs der Phasenmodulationsstärke des integriert-optischen Phasenmodulators die von der Laser-Strahlquelle in den Lichtwellenleiter eingekoppelte Lichtwelle mit einem ersten Faserkoppler in zwei Zweige, nämlich in einen Referenzzweig und einen Meßzweig, aufgeteilt wird. Die Lichtwelle im Referenzzweig dient als Referenzlichtwelle und die Lichtwelle im Meßzweig wird durch den zu vermessenden integriert-optischen Phasenmodulator in der Phase moduliert. Die beiden Lichtwellen werden daraufhin in einem zweiten Faserkoppler wieder vereinigt und dabei überlagert und das aus dieser Vereinigung entstandene, an einem ersten Ausgang des zweiten Faserkopplers abgenommene Überlagerungssignal wird mit einem schnellen Photodetektor in ein elektrisches Signal gewandelt.

Der zu vermessende integriert-optische Phasenmodulator wird vom das Modulationssignal bildenden Ausgangssignal eines Netzwerk-Analysators angesteuert, in welchen das über den schnellen Photodetektor gewonnene elektrische Signal zurückgeführt wird, wodurch die Frequenzgangmessung des optischen Phasenhubs durch Anfertigung typischer Transmissions-Plots mit Phasenhub-Amplitude und -Phase in Abhängigkeit von der Ansteuerfrequenz ermöglicht wird.

Zusätzlich wird zur Erzielung einer konstanten Phasenbeziehung zwischen den beiden zu überlagernden Lichtwellen die im Referenzzweig laufende Lichtwelle in ihrer Phase geregelt, wozu ein weiterer Photodetektor dient, der an den zweiten Ausgang des weiteren Faserkopplers angeschlossen ist und ein elektrisches Sensorsignal für einen Regler liefert, welcher seinerseits für einen weiteren, im Referenzzweig enthaltenen integriert-optischen Phasenmodulator ein dort als Modulationssignal dienendes Stellsignal liefert.

Darüber hinaus wird zur direkten Messung der Ansteuerspannung für einen Phasenhub von 180° des zu vermessenden integriert-optischen Phasenmodulators über eine Ansteuerung des integriert-optischen Phasenmodulators mit einem periodischen Signal variabler Amplitude das Maximum der detektierten Signalamplitude gesucht.

Der weitere, am zweiten Ausgang des zweiten Faserkopplers angeschlossene Photodetektor ist in zweckmäßiger Weise langsamer, also "schmalbandiger" als der am ersten Ausgang angeschlossene schnelle Photodetektor.

Auch der weitere, im Referenzzweig liegende integriert-optische Phasenmodulator ist in seinem Verhalten in zweckmäßiger Weise langsamer als der im Meßzweig angeordnete integriert-optische Phasenmodulator.

Eine vorteilhafte Weiterbildung des Verfahrens nach der Erfindung besteht darin, daß zur zusätzlichen Messung der modulationsbedingten Änderung der optischen Eingangs-Rückstreuung eines integriert-optischen Phasenmodulators das davon zurückreflektierte Licht am freien Eingang des ersten Faserkopplers mittels eines optischen Leistungsmessers gemessen wird.

In vorteilhafter Weise werden beim Verfahren nach der Erfindung Maßnahmen zur Polarisationserhaltung im Meßzweig und Referenzzweig vorgesehen. Dafür können in den beiden Zweigen polarisationserhaltende Lichtwellenleiter oder Polarisationsstellglieder, vorzugsweise insgesamt drei, sorgen.

Eine Vorrichtung zur Durchführung des Verfahrens nach der Erfindung ist dadurch gekennzeichnet, daß eine Laser-Strahlquelle über einen Lichtwellenleiter an einen Eingang eines ersten Faserkopplers angeschlossen ist, an dessen einen Ausgang sich ein optischer Referenzzweig und an dessen anderen Ausgang sich ein optischer Meßzweig anschließen. Ferner liegen im optischen Meßzweig ein zu vermessender integriert-optischer Phasenmodulator und im optischen Referenzzweig ein weiterer integriert-optischer Phasenmodulator.

Diese beiden optischen Zweige sind ausgangsseitig jeweils mit einem Eingang eines zweiten Faserkopplers verbunden, wobei die optischen Verbindungen in beiden Zweigen mit Lichtwellenleitern realisiert sind. Von einem ersten Ausgang des zweiten Faserkopplers ist das vereinigte, durch Überlagerung der beiden Zweigsignale entstandene Signal über einen Lichtwellenleiter mit einem schnellen Photodetektor verbunden, dessen elektrisches Ausgangssignal einem Netzwerk-Analysator zugeführt ist, dessen Ausgangssignal an den zu vermessenden integriert-optischen Phasenmodulator als steuerndes Modulationssignal hingeführt ist.

An den zweiten Ausgang des zweiten Faserkopplers ist über Lichtwellenleiter ein weiterer Photodetektor angeschlossen ist, dessen elektrisches Ausgangssignal einem Regler zugeführt ist, dessen elektrisches Ausgangssignal einem Regler zugeführt ist, welcher durch Regelalgorithmen dafür sorgt, daß das an den im Referenzzweig befindlichen integriert-optischen Phasenmodulator angelegte Stellsignal für eine konstante Phasenbeziehung zwischen Meß- und Referenzzweig sorgt.

Bei einer solchen Vorrichtung ist in zweckmäßiger Weise zur zusätzlichen Messung der modulationsbedingten Änderung der optischen Eingangs-Rückstreuung eines integriert-optischen Phasenmodulators an einen zweiten, die Funktion eines Ausgangs ausübenden Eingang des ersten Faserkopplers über einen Lichtwellenleiter ein optischer Leistungsmesser für Rückreflexionen angeschlossen.

Das Verfahren nach der Erfindung und eine Vorrichtung zur Durchführung dieses Verfahrens werden im folgenden anhand von vier Figuren erläutert. Es zeigen:

Fig.1 in einem Blockschaltbild den Aufbau einer MeßplatzVorrichtung nach der Erfindung,

Fig.2 nebeneinander drei Darstellungen eines I-Q-Phasenkreises mit jeweils unterschiedlichem Phasenabstand zwischen der Lichtwelle im Meßzweig und der Lichtwelle im Referenzzweig,

Fig.3 das aus der Frequenz- und Phasenmodulationstechnik bekannte Bessel-Spektrum mit der Amplitude der Spektrallinien in Abhängigkeit von der Phasenhub-Amplitude, welche der Spannungsamplitude am Eingang des zu vermessenden integriert-optischen Phasenmodulators entspricht,

Fig.4 nebeneinander die Darstellungen dreier I-QPhasenkreise und jeweils darunter das detektierte Signal bei Wechselspannungsansteuerung des integriertopti-schen Phasenmodulators in Form von leicht abgeschrägten Rechteckimpulsen,

Fig.5a bis 5c nebeneinander die Darstellungen von drei I-QPhasenkreisen und jeweils das darunter detektierte Signal bei einer Wechselspannungsansteuerung des integriert-optischen Phasenmodulators, in Fig.5a in Form einer Dreiecksspannung ($U < V\pi$) mit einer langsamen Frequenz von etwa 100 Hz, in Fig. 5b Spannungsverläufe bei $U = V\pi$ und in Fig.5c Spannungsverläufe bei $U > V\pi$,

Fig.6 die Maximumbestimmung der Bessellinie $J_1$ bei fester Frequenz, und

Fig.7 ein Bestimmen der Ansteuerspannung mit gleichgroßen Amplituden der Bessellinien $J_1$ und $J_2$.

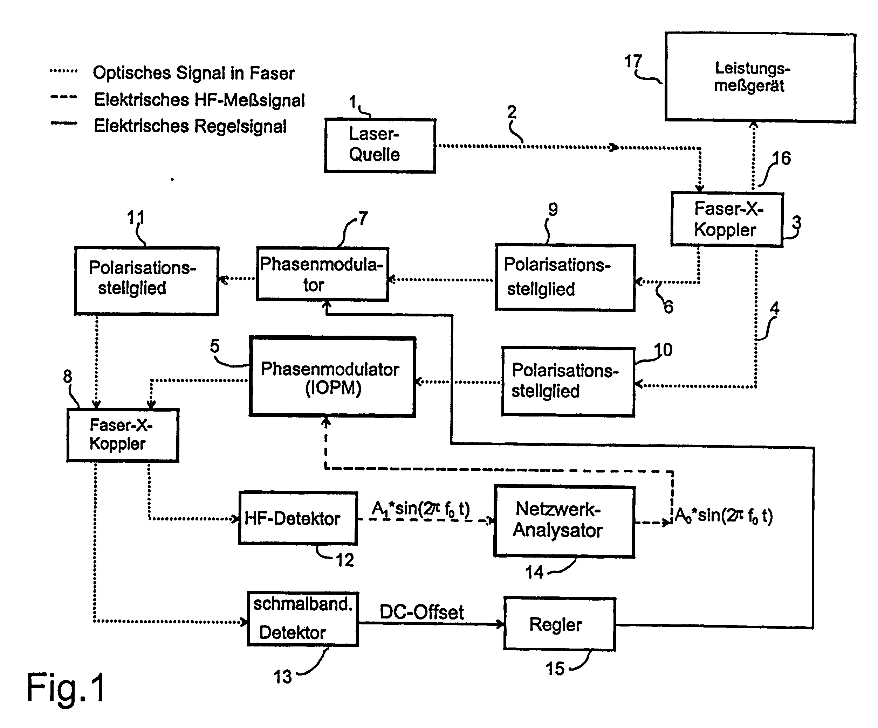

Bei der in der Fig.1 dargestellten Meßplatz-Vorrichtung für ein Qualitätsbewertungsverfahren nach der Erfindung wird das Licht von einer monomodigen Laser-Strahlquelle 1 in eine Monomode-Faser 2 eingekoppelt und an einen ersten 50:50-Faser-X-Koppler 3 herangeführt und dort in zwei gleich große Teile aufgeteilt. Ein Faser-X-Koppler ist seinem Prinzip nach ein aus zwei verschmolzenen Monomode-Fasern bestehendes Element der optischen Nachrichtentechnik, welches zwei fasergeführt ankommende Lichtwellen mischt bzw. eine Welle gleichmäßig auf beide Ausgangsfasern aufteilt.

Der eine Teil der gleichmäßig aufgeteilten Lichtwelle wird in der Vorrichtung nach Fig.1 dann - weiterhin fasergebunden - in einem Meßzweig 4 durch einen zu vermessenden integriert-optischen Phasenmodulator 5 und der andere Teil parallel dazu in einem Referenzzweig 6 durch einen die Referenzphase steuernden, zweiten integriert-optischen Phasenmodulator 7 geführt. Beide Teile werden schließlich in einem zweiten 50:50-Faser-X-Koppler 8 wieder vereinigend überlagert.

In den beiden Zweigen 4 und 6 sind insgesamt drei Polarisationsstellglieder 9, 10 und 11 zur optimalen Einstellung der Polarisation der Wellen für die nachfolgenden, je nach Bauart polarisierend wirkenden Phasenmodulatoren 5 bzw. 7 und zur optimalen Anpassung der Wellenüberlagerung vorgesehen. An den einen Ausgang des zweiten 50:50-Faser-X-Koppler 8 ist ein breitbandiger optischer Photodetektor 12 zum Messen des Frequenzgangs des zu vermessenden integriert-optischen Phasenmodulators 5 angeschlossen. Am anderen Ausgang des zweiten 50:50-Faser-X-Kopplers 8 liegt ein schmalbandiger Detektor 13, welcher als Sensorsignalgeber für die Referenzphasen-Regelung dient, wie sie später noch im einzelnen beschrieben wird.

Diese Regelung garantiert eine gleichbleibend optimale Überlagerung der Referenzzweig- mit der Meßzweig-Welle, auch bei Phasenstörungen. Die bisher beschriebenen Wege betreffen optische Signalwege, die in Lichtwellenleitertechnik ausgeführt sind, und sind wie alle optischen Signalwege in der Fig.1, gepunktet dargestellt. An dieser Stelle wird bereits darauf hingewiesen, daß in der Fig.1 der Weg des elektrischen HF-Meßsignals mit gestrichelter Linie und der Weg des elektrischen Regelsignals mit durchgezogener Linie dargestellt ist.

Mit dem in der Fig.1 dargestellten Meßaufbau können folgende Messungen vorgenommen werden:

(1) Relativer Frequenzgang des Phasenmodulationshubs, d.h. relativ zum DC-Phasenhub, mit Phasensynchronisier-Regelung.

(2) Ansteuerspannung für 180° Phasenhub (Vπ) bei geringen Frequenzen ("DC-Phasenhub").
Zusammen ergibt die Auswertung der Messungen von (1) und (2) den absoluten Frequenzgang des Phasenhubs, also die Information, wieviel Phasenhub sich bei einer bestimmten Frequenz mit einer bestimmten Spannung erzielen läßt. Dies läßt sich dann auch einfach in die nötige Ansteuerspannung bei einer bestimmten Frequenz umrechnen, um einen konstanten Phasenhub von z.B. 180° zu erhalten, wie er in digitalen Übertragungssystemen (BPSK; Binary-Phase-Shift-Keying Übertragung, Umtasten des Phasenzustands der Lichtwelle je nach Bitzustand um 0° oder 180°) erwünscht ist.

(3) Änderung der optischen Rückflußdämpfung bei Reflexionen aus dem Modulator zurück zur Laser-Strahlquelle mit der Modulationsfrequenz.

Die unter dem Punkt (1) angegebene Messung beruht auf dem Prinzip der Wellen-Selbstüberlagerung ("selbsthomodyn" bzw. "Self-Homodyning"). Das Licht der hochstabilen Laser-Strahlquelle 1 wird entsprechend Fig.1 mittels des ersten 50:50-Faser-X-Kopplers 3 in zwei Zweige aufgeteilt, wobei der eine Zweig den Referenzzweig 6 und der andere den Meßzweig 4 bildet. Im Referenzzweig 6 befindet sich zum Nachführen der Referenzzweig-Phase, wie später noch beschrieben wird, der integriert-optische Phasenmodulator 7, der langsam ist. Das Licht im Meßzweig 4 wird durch den zu testenden integriert-optischen Phasenmodulator 5 in seiner Phase moduliert.

Das ansteuernde Modulationssignal ist beispielsweise eine Sinusspannung mit variabler Frequenz, welche in vorteilhafter Weise von einem Netzwerk-Analysator 14 geliefert wird. Dann werden die beiden Zweige 4 und 6 im zweiten 50:50-Faser-X-Koppler 8 wieder vereinigt, womit eine Überlagerung der beiden Phasenlagen erreicht wird. Außer den jeweils in einem der beiden Zweige 4 und 6 angeordneten Polarisationsstellgliedern 9 und 10 ist noch das weitere Polarisationsstellglied 11 nötig, da die Polarisation der beiden zu vereinigenden Lichtwellen übereinstimmen muß. Bei Verwendung polarisationserhaltender Lichtwellenleiter (Fasern, Faserstecker und Koppler) können die Phasenstellglieder 9, 10 und 11 entfallen, weil dann die richtige Polarisation jeweils gewährleistet ist.

Das überlagerte Signal wird dann an einem Ausgang des zweiten Faser-X-Kopplers 8 durch den schnellen Photodetektor 12 detektiert, wie er in der optischen Lichtwellenleiter-Nachrichtentechnik gebräuchlich ist. Dabei wird das Summensignal der Meß- und Referenzlichtwelle quadriert und in einen Photostrom gewandelt (Leistungsdetektion bedeutet Detektion des E-Feld-Quadrats). Dieser Vorgang ist mathematisch vereinfacht in der Gleichung (3) dargestellt. Es ist zu sehen, daß sich neben zwei DC(Gleichstrom)-Termen ein Signal ergibt, welches proportional zum phasenmodulierten Signal $\phi(t)=A_0{}^*C^*\sin(2\pi f_0 t)$ ist. Es handelt sich beim Quadrieren des Selbsthomodynsignals an der Detektordiode des Photodetektors 12 also um eine lineare Demodulation.

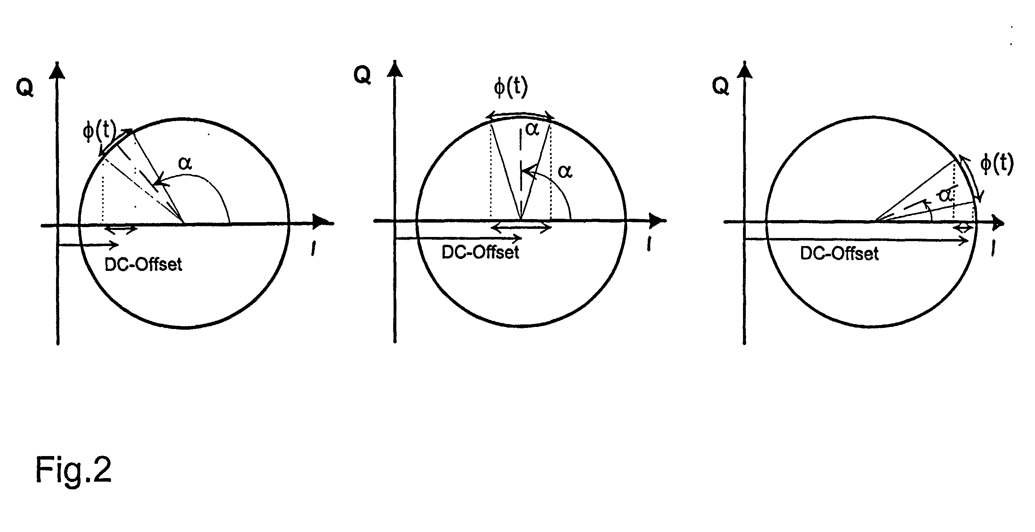

Es ergibt sich nun ein maximales elektrisches Empfangssignal bei der modulierten Frequenz, wenn die Meßzweig-Welle gegenüber der Referenz-Welle in der Phasenlage exakt um 90° verschoben ist. In diesem Zusammenhang wird auf die mittlere Darstellung in der Fig.2 hingewiesen. Wenn sich die Meßzweig-Welle in ihrer Phase verschiebt, sinkt die Überlagerungssumme und das detektierte Signal nimmt entsprechend ab. Für kleine Phasenhübe des modulierten Signals vom Netzwerk-Analysator 14 (etwa bis $\pm 10°$) ergibt sich dabei in guter Näherung ein linearer Zusammenhang zwischen Amplitude des den integriert-optischen Phasenmodulator 5 an seinen Modulationselektroden ansteuernden elektrischen Signals und der Amplitudenänderung beim Detektionssignal. Für relative Frequenzgangmessungen ist dies völlig ausreichend.

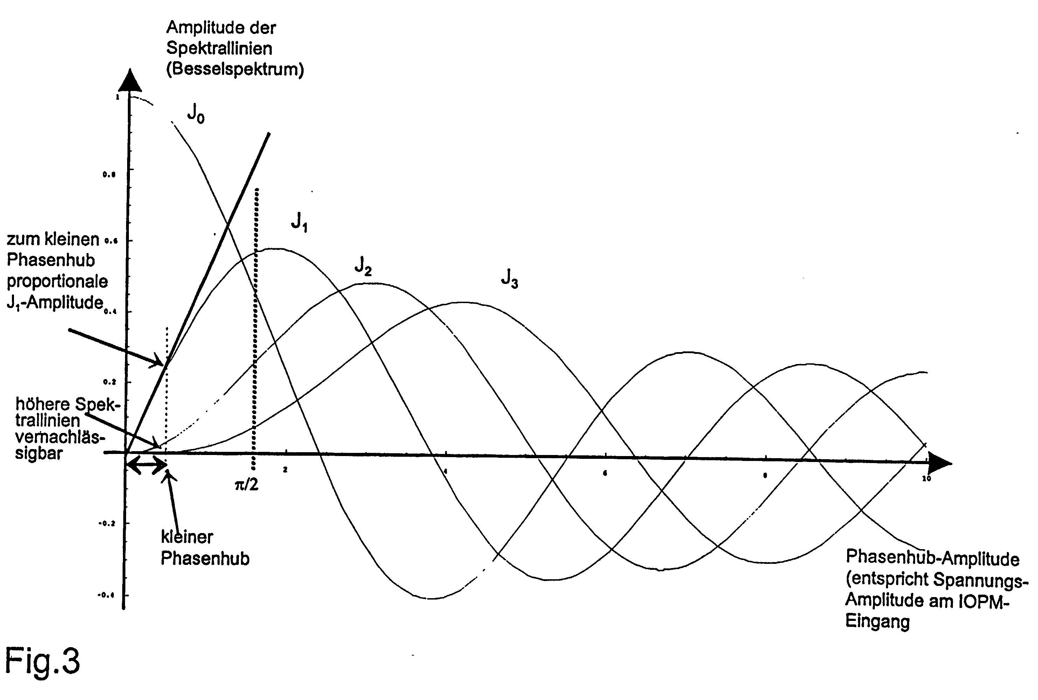

Erhöht man den Phasenhub allerdings auf größere Werte, so bildet sich das von der Frequenz- und Phasenmodulation her bekannte Bessel-Spektrum aus (siehe Fig.3), d.h. es ergeben sich noch weitere Spektrallinien im Frequenzband und zugleich geht der lineare Zusammenhang zwischen der hier als Meßgröße genutzten $J_1$-Amplitude und der den integriert-optischen Phasenmodulator 5 ansteuernden Spannung verloren. Dies wird bei diesem Meßverfahren durch die erwähnten geringen Ansteueramplituden vermieden.

$$\phi(t)=A_0 \cdot C \cdot \sin(2\pi f_0 t); \qquad \text{Gl. (1)}$$

*C*: physikalischer Proportionalitätsfaktor

$$J_1(A_0) \cong A_0 \cdot D \cdot \sin(\alpha); \qquad \text{Gl. (2)}$$

*D*: physikalischer Proportionalitätsfaktor

$$I_{Det.}(t) = E \cdot \mathrm{Re}\{[(A_{Meß} \cdot e^{j(2\pi f_0 t + \phi(t))}) + (A_{Ref} \cdot e^{j(2\pi f_0 t + \alpha)})]^2\} \approx$$
$$\approx E \cdot \{A_{Meß}^2 + A_{Ref}^2 + A_{Meß} \cdot A_{Ref} \cdot \phi(t) \cdot \sin(\alpha)\} \qquad ; \qquad \text{Gl. (3)}$$

*E*: physikalischer Proportionalitätsfaktor.

Da sich aufgrund von Temperaturausdehnungen und Gebäudeschwingungen die Lauflängen in den beiden Zweigen 4 und 6 ständig leicht ändern, ist eine aktive Phasennachführung des Referenzsignals an den Meßzweig 4 nötig. Dazu wird, wie Fig.2 zeigt, der DC-Offset des Überlagerungssignals durch den zweiten Photodetektor 13, der langsamer und somit "schmalbandiger" als der erste Photodetektor 12 ist, am zweiten Ausgang des 50:50-Faser-X-Kopplers 8 detektiert und einem Regelkreis mit einem Regler 15 zugeführt.

In diesem Regelkreis wird nach technisch bekannten Verfahren (PI-Regler) eine Ansteuerspannung für den integriert-optischen Phasenmodulator 7 im Referenzzweig 6 derart generiert, daß die durch Temperaturausdehnung und sonstige unerwünschte Längenänderungen der Lichtwellenleiter entstehende Phasendrift (Zeitkonstante in der Größenordnung von 1/10 Sekunde) zwischen den beiden überlagerten Signalen exakt ausgeglichen wird. Es ergibt sich damit eine zeitlich konstante Phasenlage der beiden im zweiten Faser-X-Koppler 8 (Fig.1) überlagerten Signale, womit eine ungestörte Frequenzgangmessung ermöglicht wird.

Solange das an die Modulationselektroden des integriert-optischen Phasenmodulators 7 im Referenzzweig 6 ausgegebene Regelsignal nicht den Ansteuerbereich von etwa ±20V überschreitet, was ungefähr 5 Wellenlängen entspricht, funktioniert diese Phasenlage-Regelung. Falls dieser Spannungsbereich überschritten wird, erfolgt ein Reset des Reglers 15, wodurch dieser auf einen voreingestellten Wert etwa in der Mitte des Ansteuerbereichs zurückgesetzt wird und dann sofort wieder mit dem Regeln beginnt. Dabei entsteht ein kurzer Einbruch des geregelten Überlagerungssignals, der je nach Wahl des voreingestellten Reset-Wertes kaum stört.

Es wird entsprechend Fig.2 jeweils die Projektion des Phasenmodulationssignals $\Phi(t)$ auf die In-Phase-Achse I im Phasenkreis (in Fig.2 waagrechter Doppelpfeil an der horizontalen Achse, entspricht dem Realteil in komplexer Darstellung) detektiert. Die über den in der Fig.1 mit 15 bezeichneten Regler verlaufende Regelung des DC-Offset-Wertes (in Fig.2 waagrechter Pfeil mit einer Spitze) auf einen konstanten Wert bewirkt eine konstante Phasenlage zwischen Meßzweigwelle und Referenzzweigwelle.

Die maximale und gleichzeitig am wenigsten verzerrte Signalamplitude erhält man dabei bei einer Regelung auf den DC-Wert in der Mitte des Phasenkreises (Phasenlage 90°, mittlere Darstellung in Fig.2). Eine ungünstige Phasenlage mit sehr kleiner projizierter Signalamplitude stellt dagegen die rechte Darstellung in der Fig.2 dar.

Fig.3 zeigt das aus der Frequenz- und Phasenmodulationstechnik bekannte Bessel-Spektrum mit der Amplitude der Spektrallinien in Abhängigkeit von der Phasenhub-Amplitude, welche der Spannungsamplitude am Eingang des zu vermessenden integriert-optischen Phasenmodulators entspricht. Bei kleiner Ansteuerspannungsamplitude ergibt sich ein linearer Zusammenhang zwischen $J_1$-Amplitude und Ansteuerspannungsamplitude (Phasenhub). Erst bei größerem Phasenhub prägt sich der nichtlineare Effekt bei der Winkelmodulation aus ("Besselspektrum").

Dieser Sachverhalt ist in der Fig.3 links unten erkennbar. Der Doppelpfeil an der horizontalen Achse zeigt den kleinen Phasenhub, dem an der vertikalen Amplitudenachse der Spektrallinien des Besselspektrums eine Ansteuerungsamplitude zugeordnet ist, die der J1-Amplitude proportional ist. Die höheren Spektrallinien entlang J2, J3 usw. sind dort vernachlässigbar.

Im folgenden wird auf die unter dem Punkt (2) angegebene Messung eingegangen. Das Verhältnis zwischen Ansteuerspannung und Phasenhub des zu vermessenden integriert-optischen Phasenmodulators 5 bei beliebigen Frequenzen wird mit Hilfe einer Wechselspannungsansteuerung des integriert-optischen Phasenmodulators 5, beispielsweise mit einem Rechtecksignal, und einer Spitze-Spitze-Spannungsmessung, z.B. einem Digital-Speicher-Oszilloskop mit Meßfunktionalität durchgeführt. Die Wechselspannungansteuerung des integriert-optischen Phasenmodulators 5 moduliert die Phase der Welle im Meßzweig 4 und erzeugt daher nach der Überlagerung bei der Detektion im schnellen Photodetektor 12 ebenfalls eine Wechselspannung.

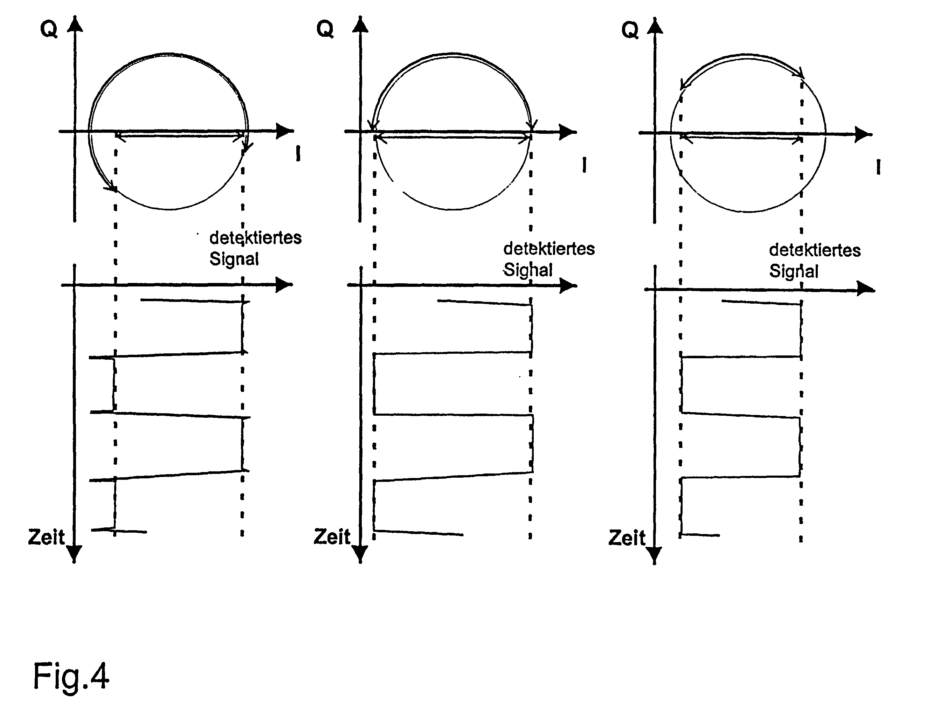

In diesem Zusammenhang wird auf die in der Fig.4 für drei verschiedene Fälle nebeneinander dargestellten Phasenkreise in der I-Q-Ebene hingewiesen. Diese detektierte Wechselspannung kann aber einen bestimmten Wert nicht überschreiten, welcher sich exakt bei ±90° Phasenhub ergibt. Danach sinkt die Amplitude nämlich wieder, wie sich unschwer anhand der In-Phase-Projektionen (Doppelpfeil entlang der horizontalen I-Achse) des Phasenkreises erkennen läßt. Die RechteckSpannung, bei der die Spitzenwert-Messung des Empfangssignals ein Maximum anzeigt, ist damit die nötige Spannung für 180° Phasenhub, die sogenannte $V\pi$.

Was die Amplituden-Messung angeht, so wird bei konstanter Ansteueramplitude des zu vermessenden integriert-optischen Phasenmodulators 5 die größte Amplitude immer dann detektiert, wenn der Quadraturanteil (Projektion auf vertikale Achse Q) der Modulationsendpunkte gleich ist, d.h. in anderen Worten, wenn das modulierte Phasensignal symmetrisch zur senkrechten Phasenkreisachse ist. Da die Phase des Signals allerdings bei dieser Messung nicht geregelt werden kann, ohne das Meßergebnis zu verfälschen, fährt man bei einer festen Test-Ansteueramplitude des integriert-optischen Phasenmodulators 5 die Referenzphase mit dem im Referenzzweig 6 angeordneten integriert-optischen Phasenmodulator 7 langsam hoch und beobachtet das Ergebnis mit einem Speicheroszilloskop.

Aus dem aufgezeichneten Signal läßt sich dann einfach die Stelle mit der größten Amplitude finden und diese Amplitude messen. Dann erhöht man die Ansteuerspannung des zu messenden integriert-optischen Phasenmodulators 5 und wiederholt die Messung. Aus dieser Meßreihe läßt sich leicht das Maximum und damit $V\pi$ herauslesen. Alternativ kann man auch auf das absichtliche Hochfahren der Referenzphase verzichten und sich nur die zufällige Phasen-Fehlanpassung aufgrund der Temperaturausdehnung der Lichtwellenleiter zunutze machen. Dieser etwas aufwendige mehrfache Meßvorgang kann selbstverständlich durch geeignete Software und Schnittstellen zu den Meßgeräten automatisiert werden.

Das Meßverfahren läßt sich wiederum mit Hilfe der in Fig.4 dargestellten Phasenkreise erklären. Die größte detektierte Signalamplitude, hier für Rechteck-Ansteuerung mit leicht schrägen Flanken, entsteht bei 180° Phasenhub und 90° mittlere Phasenlage zwischen Test- und Referenzzweig. Dieser Optimalfall ist in der mittleren Darstellung von Fig.4 gezeigt.

Im folgenden wird schließlich noch auf die unter Punkt (3) angeführte Messung erläuternd eingegangen. Elektromagnetische Wellen erfahren beim Übergang von einem Ausbreitungsmedium (z.B. Luft) in ein anderes mit einem anderen Brechungsindex (z.B. Glas) teilweise Reflexionen. Da der optische Kristall im integriert-optischen Phasenmodulator durch das jeweils angelegte elektrische Feld seinen Brechungsindex dynamisch ändert, werden auch hier geringe Anteile des im Lichtwellenleiter passierenden Lichtes in den Zubringer-Lichtwellenleiter 2 zurückreflektiert.

Treffen diese Reflexionen auf die Laser-Strahlquelle 1, so können sie die Stabilität des Lasers empfindlich beeinflussen, besonders da diese Reflexionsintensität mit der Phasenmodulator-Ansteuerfrequenz moduliert ist. Die relative Zuoder Abnahme dieser Reflexionen in Abhängigkeit von der Modulationsfrequenz und der Modulationsamplitude läßt sich nun am mit 16 bezeichneten Port des ersten Faser-X-Kopplers 3 mit einem optischen Leistungsmeßgerät 17 messen. Die dort gemessene Amplitudenänderung beträgt aufgrund der 50:50 Teilung des Faser-X-Kopplers 3 nur die Hälfte des wahren Wertes.

Unter Zugrundelegen des Verfahrens nach der Erfindung läßt sich eine außerordentlich genau und zuverlässig arbeitende, breitbandig und direkt vermessende Meßplatz-Vorrichtung für die Qualität von integriert-optischen Phasenmodulatoren aufbauen.

Nachstehend werden weitere Meßmethoden zur Bestimmung von $V\pi$ beschrieben, und zwar

(A) im unteren Frequenzbereich -> "$V\pi$-DC"

(B) im HF-Bereich zur Vermessung von $V\pi$ über der Frequenz, und zwar mit Hilfe des Maximums der ersten Bessellinie ($J_1$) bei einem Phasenhub von 2*103°, und

(C) im HF-Bereich zur Vermessung von $V\pi$ über der Frequenz, mit Hilfe der Amplitudengleichheit von erster und zweiter Bessellinie ($J_1$ und $J_2$) bei einem Phasenhub von 2*149°

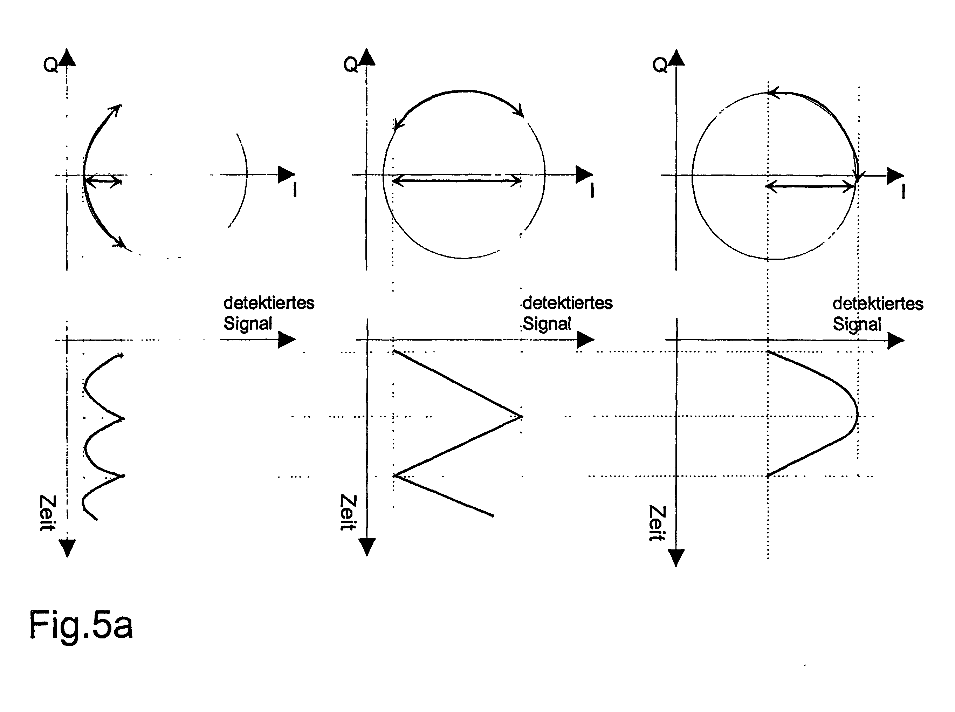

Im Fall (A) wird die vorstehend beschriebene Methode zur Messung von $V\pi$ dahingehend abgewandelt, daß eine Dreieckspannung mit einer niedrigen Frequenz von etwa 100Hz (praktisch DC-Ansteuerung) durchgeführt wird. (Siehe Fig.5a, Mitte). Die Dreieckspannung mit der niedrigen Frequenz von etwa 100 Hz wird an den Phasenmodulator 5 angelegt und das an einem Kopplerausgang des Faser-X-Kopplers 8 mittels eines Phasendetektors detektierte Signal wird beobachtet. (Die Dreiecksignalform wird durch die nichtlineare Abbildung am Phasenmodulator 5 im Idealfall bei einer Auslenkung von +/-90° genau so umgesetzt, daß als Realteilprojektion ein Sinus zu beobachten ist.) (Siehe Fig. 5a, rechte Spalte).

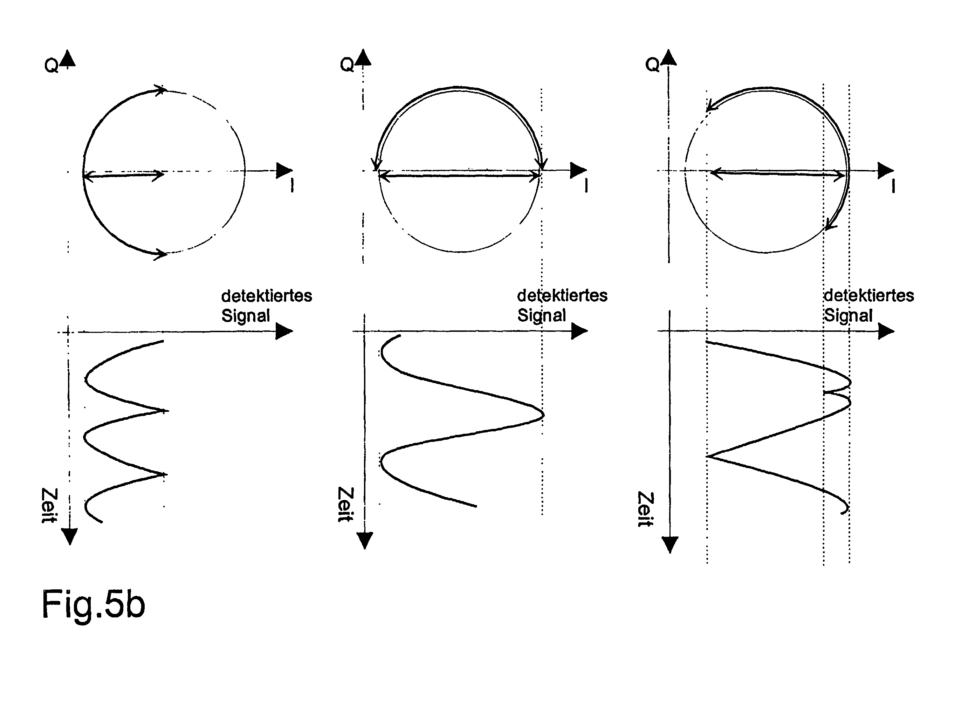

In Fig.5b sind in der mittleren Spalte die Spannungsverläufe bei U = $V\pi$ und unterschiedliche Phasendifferenzen dargestellt.

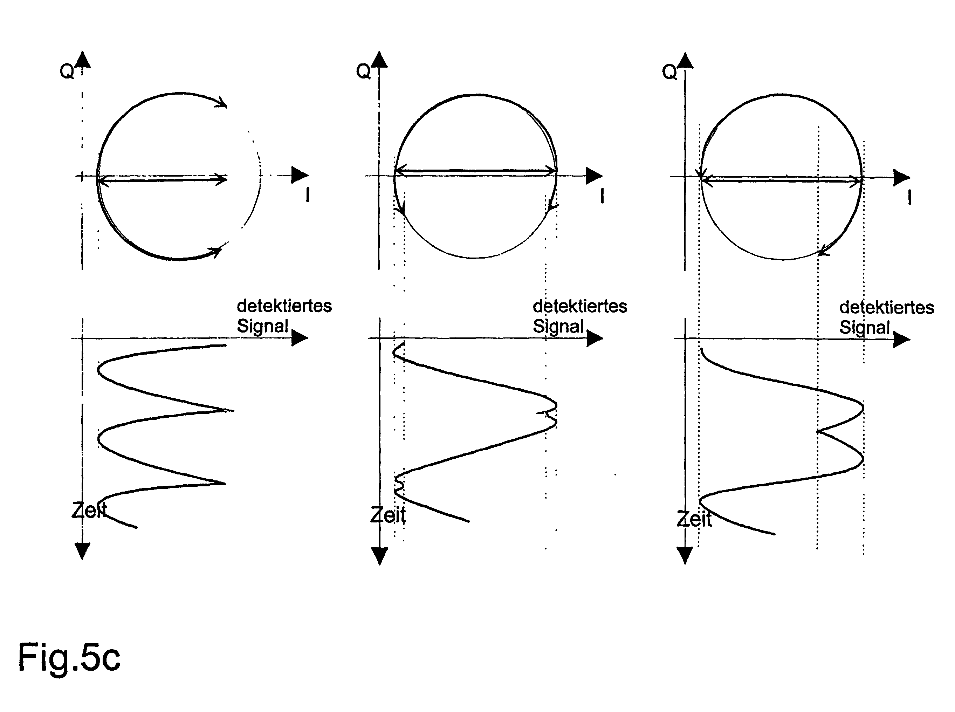

Wie Fig.5c zu entnehmen ist, entsteht ab einer Spannung, die etwas über $V\pi$ liegt, d.h. U > $V\pi$ und bei einer entsprechenden Phasendifferenz zwischen dem Test- und Referenzzweig ein charakteristisches Signal mit zwei kleinen Einbuchtungen an Maxima und Minima (siehe Fig.5c, Mitte). Die Spannung, ab welcher dieser Effekt auftritt, läßt sich bei der niedrigen Frequenz sehr genau beobachten und damit wird ein exakter Spannungswert für "DC-$V\pi$" erhalten.

Im Fall (B) weist die $J_1$-Bessellinie bei einem Phasenhub von 1,6rad, was einem einseitigen Phasenhub von 103° entspricht, ein Maximum auf. Nachdem die Ansteuerspannungsamplitude für dieses Maximum bestimmt ist, läßt sich auf $V\pi$ zurückrechnen. Diese Spannung bei einer konstanten Frequenz wird bestimmt, indem die Bessellinie $J_1$ auf einem Spektrumanalysator beobachtet wird und dabei langsam die Ansteuerspannungsamplitude hochgefahren wird.

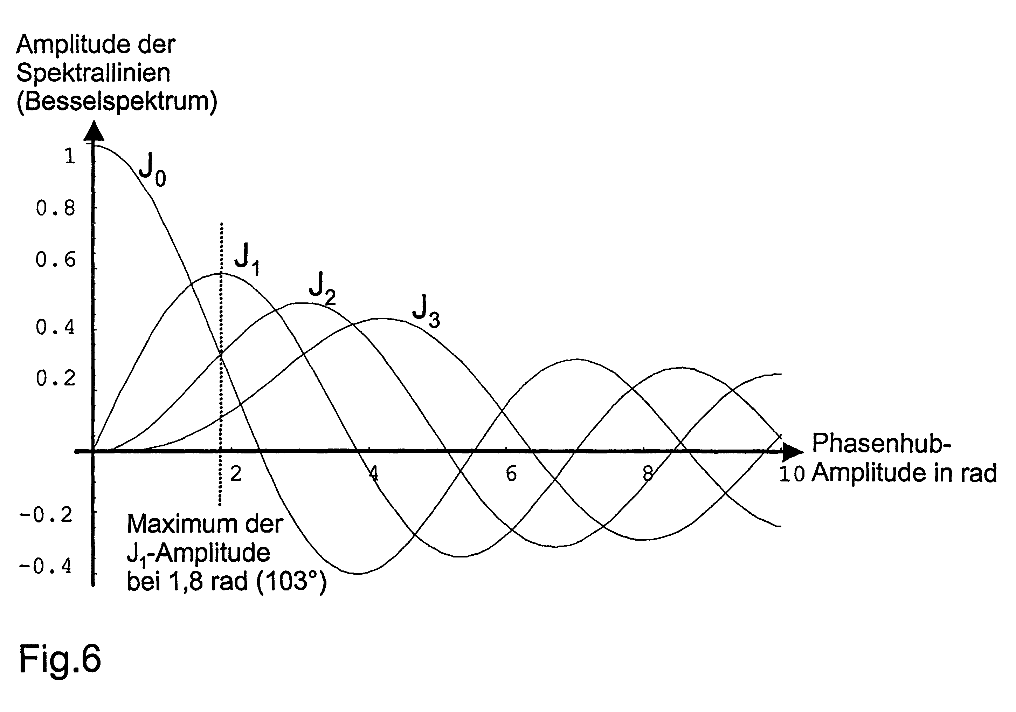

Falls das Signal aufgrund Temperaturausdehnung der Fasern schwankt, läßt sich mit der Maximum-Hold-Funktion des Spektrumanalysators die Messung vereinfachen, da dann der maximale Wert gespeichert wird. Damit kann der maximale Wert zur jeweiligen Ansteuerspannung leicht bestimmt werden. Die Meßgenauigkeit und -Geschwindigkeit kann stark erhöht werden, indem der vom Spektrumanalysator beobachtete Frequenzbereich um die Bessel $J_1$-Linie eng eingegrenzt wird. Dies ist möglich, da ja nur jeweils bei einer festen Frequenz gemessen wird. In Fig.6 ist der Zusammenhang mit Hilfe der Besselfunktionsschar veranschaulicht.

Im Fall (C) gelingt ähnlich wie beim Fall (B) das Bestimmen eines Zusammenhangs zwischen Ansteuerspannung und Phasenhub durch Beobachten des Besselspektrums mit Hilfe eines Spektrumanalysators. Hier werden die Bessellinien $J_1$ und $J_2$ gleichzeitig beobachtet und die IOPM-Ansteuerspannung wird solange hochgefahren, bis die Bessellinien $J_1$ und $J_2$ gleich groß sind, was bei einem einseitigem Phasenhub von 149° der Fall ist, was einem Gesamtphasenhub von 298° entspricht.

Aufgrund der unterschiedlichen Bewertung der geraden und ungeraden Bessellinien mit dem Sinus oder Cosinus des Phasendifferenzwinkels, wie unter Bezugnahme auf Fig.3 bereits ausgeführt ist, muß ohne eine exakte Phasendifferenzregelung für jeden Spannungswert darauf gewartet, daß sich aufgrund der zufälligen Faserausdehnungen einmal die maximale $J_1$-Amplitude und einmal die maximale $J_2$-Amplitude ausgebildet hat, was mit Hilfe der Maximum-Hold-Funktion des Spektrumanalysators bequem realisierbar ist.

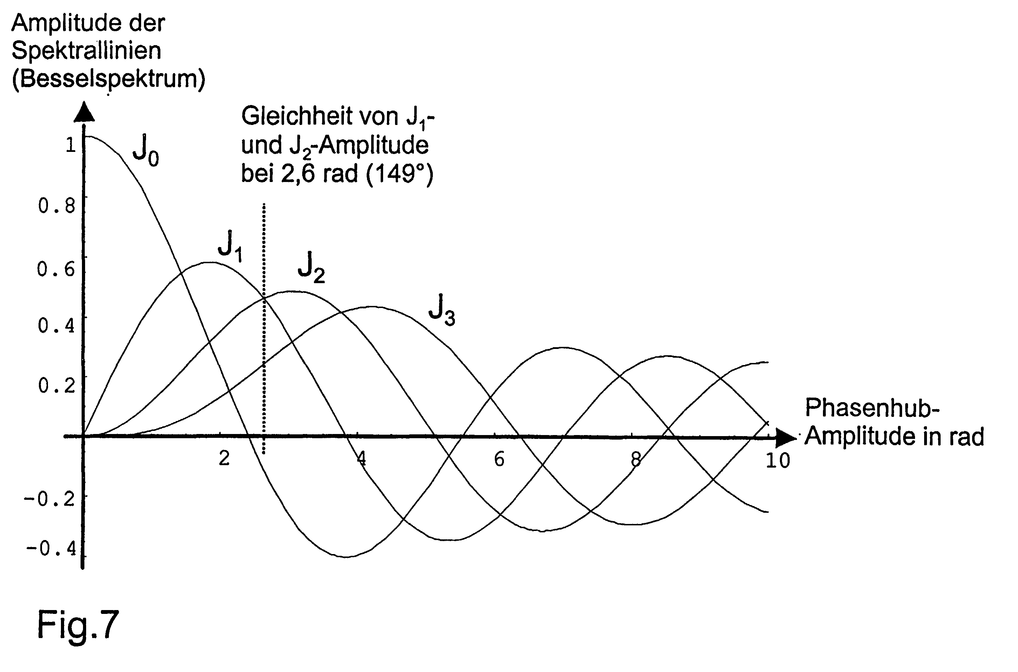

Falls eine funktionierende Phasenregelung eingesetzt werden kann, muß die Phasendifferenz auf exakt 45° gehalten werden, da sonst die geraden und ungeraden Linien ungleich gedämpft werden, womit kein direkter Vergleich einer ungeraden mit einer geraden Linienamplitude mehr möglich ist. Aus der somit bestimmten Spannung für 298° Phasenhub läßt sich wieder leicht auf die Spannung für 180° zurückrechnen. Veranschaulicht wird dieser Zusammenhang wieder anhand der Bessellinien in Fig.7.

Alle drei hier zusätzlich angeführten Meßmethoden können entweder mit einer Phasendifferenzregelung oder ohne diese eingesetzt werden. Im Fall (A) ist eine stabilere Messung möglich; allerdings muß auf die richtige Einstellung der Phasendifferenz geachtet werden. Einfacher erscheint es, den entsprechenden Phasendifferenzzustand aufgrund zufälliger Temperaturausdehnungsschwankungen der Glasfasern abzuwarten.

Im Fall (B) kann auch durch absichtliches Manipulieren der Phasenlage durch Spannungsansteuerung des zweiten Phasenmodulators (7) (Referenzzweigmodulator) oder auch durch die zufälligen Phasendifferenzänderungen gewährleistet sein, daß alle Phasendifferenzzustände (0° bis 360°) durchfahren werden, damit auf jeden Fall das benötigte Signal mit der jeweils maximalen gewünschten Amplitude beobachtet werden kann.

Dank der Funktionalität heutiger Meßgeräte (Speicheroszilloskop mit Hold-Funktion und Spektrumanalysator mit TRACEoder Maximum-Hold-Funktion und engem Beobachtungsfrequenzbereich) ist dies kein Problem.

**Patentansprüche**

1. Verfahren zur qualitativen Bewertung der Abhängigkeit des optischen Phasenhubs einer einen integriert-optischen Phasenmodulator (IOPM) passierenden Lichtwelle von der Ansteuerfrequenz und der Ansteuerspannung eines elektrischen Modulationssignals, das an ein Elektrodenpaar des durch einen optischen Kristall gebildeten, integriert-optischen Phasenmodulators angelegt wird, in den die von einer Laser-Strahlquelle über Lichtwellenleiter herangeführte Lichtwelle zur Phasenmodulation eingekoppelt wird, **dadurch gekennzeichnet, daß** zur direkten Messung des Frequenzgangs der Phasenmodulationsstärke des integriert-optischen Phasenmodulators (5) die von der Laser-Strahlquelle (1) in den Lichtwellenleiter (2) eingekoppelte Lichtwelle mit einem ersten Faserkoppler (3) in zwei Zweige, nämlich in einen Referenzzweig (6) und einen Meßzweig (4), aufgeteilt wird, daß die Lichtwelle im Referenzzweig als Referenzlichtwelle dient und die Lichtwelle im Meßzweig durch den zu vermessenden integriert-optischen Phasenmodulator in der Phase moduliert wird, daß die beiden Lichtwellen daraufhin in einem zweiten Faserkoppler (8) wieder vereinigt und dabei überlagert werden und das aus dieser Vereinigung entstandene, an einem ersten Ausgang des zweiten Faserkopplers abgenommene Überlagerungssignal mit einem schnellen Photodetektor (5) in ein elektrisches Signal gewandelt wird, daß der zu vermessende integriert-optische Phasenmodulator vom das Modulationssignal bildenden Ausgangssignal eines Netzwerk-Analysators (14) angesteuert wird, in welchen das über den schnellen Photodetektor gewonnene elektrische Signal zurückgeführt wird, wodurch die Frequenzgangmessung des optischen Phasenhubs durch Anfertigung typischer Transmissions-Plots mit Phasenhub-Amplitude und -Phase in Abhängigkeit von der Ansteuerfrequenz ermöglicht wird, daß zusätzlich zur Erzielung einer konstanten Phasenbeziehung zwischen den beiden zu überlagernden Lichtwellen die im Referenzzweig laufende Lichtwelle in ihrer Phase geregelt wird, wozu ein weiterer Photodetektor (13) dient, der an den zweiten Ausgang des weiteren Faserkopplers angeschlossen ist und ein elektrisches Sensorsignal für einen Regler (15) liefert, welcher seinerseits für einen weiteren, im Referenzzweig enthaltenen integriert-optischen Phasenmodulator (7) ein dort als Modulationssignal dienendes Stellsignal liefert, und daß darüber hinaus zur direkten Messung der Ansteuerspannung für einen Phasenhub von 180° des integriert-optischen Phasenmodulators über eine Ansteuerung des zu vermessenden integriert-optischen Phasenmodulators mit einem periodischen Signal variabler Amplitude das Maximum der detektierten Signalamplitude gesucht wird.

2. Verfahren nach Anspruch 1, **dadurch gekennzeichnet, daß** zur zusätzlichen Messung der modulationsbedingten Änderung der optischen Eingangs-Rückstreuung von integriert-optischen Phasenmodulatoren (6, 7) das davon zurückreflektierte Licht am freien Eingang (16) des ersten Faserkopplers (3) gemessen wird.

3. Verfahren nach einem der Ansprüche 1 oder 2, **dadurch gekennzeichnet, daß** Maßnahmen zur Polarisationserhaltung im Meßzweig (4) und Referenzzweig (6) enthalten sind.

4. Verfahren nach Anspruch 3, **dadurch gekennzeichnet, daß** in den beiden Zweigen (4, 6) polarisationserhaltende Lichtwellenleiter vorgesehen werden.

5. Verfahren nach Anspruch 3, **dadurch gekennzeichnet, daß** in den beiden Zweigen (4; 6) Polarisationsstellglieder (10: 9, 11), vorzugsweise insgesamt drei, für die Polarisationserhaltung sorgen.

6. Verfahren nach einem der vorhergehenden Ansprüche, **gekennzeichnet durch** die Verwendung einer monomodigen Laser-Strahlquelle (1) und von Monomode-Lichtwellenleiter-Fasern.

7. Verfahren nach einem der vorhergehenden Ansprüche, **dadurch gekennzeichnet, daß** als Faserkoppler (3, 8) 50:50-Faser-X-Koppler eingesetzt werden.

8. Verfahren nach einem der vorhergehenden Ansprüche **dadurch gekennzeichnet, daß** das den integriert-optischen Phasenmodulator (5) ansteuernde Modulationssignal ein Rechtecksignal ist.

9. Verfahren nach einem der Ansprüche 1 bis 7, **dadurch gekennzeichnet, daß** den integriert-optischen Phasenmodulator (5) ansteuernde Modulationssignal für den integriert-optischen Phasenmodulator (5) ein dreieckförmiges Signal ist.

10. Verfahren nach Anspruch 9, **dadurch gekennzeichnet, daß** das dreieckförmige Modulationssignal eine niedrige Frequenz von etwa 100 Hz hat.

11. Verfahren nach einem der Ansprüche 1 bis 7, **dadurch gekennzeichnet, daß** zur Vermessung des Phasenhubs des integriert-optischen Phasenmodulators (5) als Ansteuerfrequenz eine feste Hochfrequenz verwendet wird, daß mit dem als Spektrumanalysator wirksamen Netzwerk-Analysator (14) das Besselspektrum beobachtet wird und durch Hochfahren der Ansteuerspannungsamplitude der maximale Amplitudenwert der ersten Bessellinie ($J_1$-Linie) ermittelt wird, bei dem die Amplitude des Phasenhubs 1,8 rad (= 103°) beträgt, und daß dann nach der Bestimmung der Ansteuerspannungsamplitude für dieses Maximum auf die Spannung für einen Phasenhub von $\pi$ zurückgerechnet wird.

12. Verfahren nach einem der Ansprüche 1 bis 7, **dadurch gekennzeichnet, daß** zur Vermessung des Phasenhubs des integriert-optischen Phasenmodulators (5) als Ansteuerfrequenz eine feste Hochfrequenz verwendet wird, daß mit dem als Spektrumanalysator wirksamen Netzwerk-Analysator (14) das Besselspektrum beobachtet wird und durch Hochfahren der Ansteuerspannungsamplitude ein Zustand hergestellt wird, in welchem die erste Bessellinie ($J_1$-Linie) und die zweite Bessellinie ($J_2$-Linie) gleiche Amplitudenwerte haben, was bei einseitigem Phasenhub von 149°, entsprechend einem gesamten Phasenhub von 298°, der Fall ist, und daß dann nach der Bestimmung der Ansteuerspannungsamplitude für dieses Maximum auf die Spannung für einen Phasenhub von $\pi$ zurückgerechnet wird.

13. Verfahren nach den Ansprüchen 8, 9, 11 oder 12, **dadurch gekennzeichnet, daß** eine Phasendifferenzregelung zwischen den beiden integriert-optischen Phasenmodulatoren (5 und 7) vorgenommen wird.

14. Vorrichtung zur Durchführung des Verfahrens nach Anspruch 1, **dadurch gekennzeichnet, daß** eine Laser-Strahlquelle (1) über einen Lichtwellenleiter (2) an einen Eingang eines ersten Faserkopplers (3) angeschlossen ist, an dessen einen Ausgang sich ein optischer Referenzzweig (6) und an dessen anderen Ausgang sich ein optischer Meßzweig (4) anschließen, daß im optischen Meßzweig ein zu vermessender integriert-optischer Phasenmodulator (5) und im optischen Referenzzweig ein weiterer integriert-optischer Phasenmodulator (7) liegen, daß diese beiden optischen Zweige ausgangsseitig jeweils mit einem Eingang eines zweiten Faserkopplers (8) verbunden sind, wobei die optischen Verbindungen in beiden Zweigen mit Lichtwellenleitern realisiert sind, daß von einem ersten Ausgang des zweiten Faserkopplers das vereinigte, durch Überlagerung der beiden Zweigsignale entstandene Signal über einen Lichtwellenleiter mit einem schnellen Photodetektor (12) verbunden ist, dessen elektrisches Ausgangssignal einem Netzwerk-Analysator (14) zugeführt ist, dessen Ausgangssignal an den zu vermessenden integriert-optischen Phasenmodulator als steuerndes Modulationssignal hingeführt ist, daß an den zweiten Ausgang des zweiten Faserkopplers über Lichtwellenleiter ein weiterer Photodetektor (13) angeschlossen ist, dessen elektrisches Ausgangssignal einem Regler (15) zugeführt ist, welcher durch Regelalgorithmen dafür sorgt, daß das an den im Referenzzweig befindlichen integriert-optischen Phasenmodulator (7) angelegte Stellsignal für eine konstante Phasenbeziehung zwischen Meß- und Referenzzweig sorgt.

**15.** Vorrichtung nach Anspruch 14, **dadurch gekennzeichnet, daß** der Regelkreis ein Mehrfaches der Wellenlänge ausregeln kann, bei Überschreiten seines Regelbereichs ein Reset auf einen Wert etwa in der Mitte seines Stellbereichs vornimmt und somit ohne störenden Signaleinbruch weiterregelt.

**16.** Vorrichtung nach Anspruch 14, **dadurch gekennzeichnet, daß** an einen zweiten, die Funktion eines Ausgangs ausübenden Eingang (16) des ersten Faserkopplers (3) über einen Lichtwellenleiter ein optischer Leistungsmesser (17) für die Messung von Rückreflexionen angeschlossen ist.

**17.** Vorrichtung nach Anspruch 14 oder 15, **dadurch gekennzeichnet, daß** in den Meßzweig (4) und in den Referenzzweig (6) Polarisationsstellglieder (10; 9, 11) zur Erreichung einer Polarisationserhaltung in den beiden Zweigen eingeschaltet sind.

**18.** Vorrichtung nach einem der Ansprüche 14 bis 17, **dadurch gekennzeichnet, daß** die beiden Faserkoppler (3, 8) 50:50-Faser-X-Koppler sind.

**Claims**

**1.** A method for qualitative assessment of the optical phase deviation of a light wave passing through an integrated optical phase modulator (IOPM) as a function of the frequency and voltage for signalling an electrical modulation signal applied to an electrode pair of said integrated optical phase modulator formed by an optical crystal into which the light wave presented from a laser beam source via a fiber-optic conductor is coupled for phase modulation, **characterized in that** for directly measuring the frequency response of the depth of phase modulation of said integrated optical phase modulator (5) said light wave coupled from said laser beam source (1) into said fiber-optic conductor (2) is branched by a first fiber coupler (3) into two branches, namely a reference branch (6) and a measurement branch (4), that said light wave in said reference branch serves as the reference light wave and that said light wave in said measurement branch is phase modulated by said integrated optical phase modulator being tested, that said two light waves are then reunited in a second fiber coupler (8) in being heterodyned and that said heterodyne signal obtained from a first output of said second fiber coupler is converted by a fast photodetector (5) into an electrical signal, that said integrated optical phase modulator being tested is signalled by the output signal forming said modulation signal of a network analyzer (14) into which said electrical signal obtained via said fast photodetector is returned in thus permitting measurement of said frequency response of said optical phase deviation by plotting the amplitude and phase of said phase deviation as a function of said signalling frequency, that, in addition, to achieve a constant phase relationship between said two light waves to be heterodyned said light wave running in said reference branch is controlled in phase, a further photodetector (13) serving for this purpose which is connected to the second output of said further fiber coupler in furnishing an electrical sensor signal for a closed loop controller (15) which in turn furnishes for a further integrated optical phase modulator (7) contained in said reference branch a positioning signal serving there as said modulation signal, and that, in addition, for directly measuring said signalling voltage for a phase deviation of 180° of said integrated optical phase modulator being tested the maximum of said detected signal amplitude is sought by signalling said integrated optical phase modulator being tested with a periodic signal of variable amplitude.

**2.** The method as set forth in claim 1, **characterized in that** for additionally measuring the change in the optical input reflection of said integrated optical phase modulators (6, 7) due to modulation, the light reflected back therefrom is measured at the free input (16) of said first fiber coupler (3).

3. The method as set forth in claim 1 or claim 2, **characterized in that** means are provided for maintaining polarization in said measurement branch (4) and said reference branch (6).

4. The method as set forth in claim 3, **characterized in that** polarization-maintaining fiber-optic conductors are provided in both branches (4, 6).

5. The method as set forth in claim 3, **characterized in that** polarization positioners (10; 9, 11), prefereably a total of three thereof, maintain polarization in both branches (4; 6).

6. The method as set forth in any of the preceding claims, **characterized by** use of a monomode laser beam source (1) and monomode fiber-optic conductor fibers.

7. The method as set forth in any of the preceding claims, **characterized in that** 50:50 fiber X couplers are employed as fiber connectors (3. 8).

8. The method as set forth in any of the preceding claims, **characterized in that** said modulation signal signalling said integrated optical phase modulator (5) is a square-wave signal.

9. The method as set forth in any of the claims 1 to 7, **characterized in that** said modulation signal signalling said integrated optical phase modulator (5) is a delta signal for said integrated optical phase modulator (5).

10. The method as set forth in claim 9, **characterized in that** said delta modulation signal has a low frequency of approximately 100 Hz.

11. The method as set forth in any of the claims 1 to 7, **characterized in that** for testing said phase deviation of said integrated optical phase modulator (5) a fixed high frequency is used as said signalling frequency, that the Bessel spectrum is observed with said network analyzer (14) effective as a spectrum analyzer and that by increasing the amplitude of said signalling voltage the maximum amplitude value of the first Bessel line ($J_1$ line) is obtained at which said amplitude of said phase deviation is 1.8 rad (= 103°) and that then for determining said amplitude of said signalling voltage for this maximum a calculation is made back to said voltage for a phase deviation of $\pi$.

12. The method as set forth in any of the claims 1 to 7, **characterized in that** for testing said phase deviation of said integrated optical phase modulator (5) a fixed high frequency is used as said signalling frequency, that said Bessel spectrum is observed with said network analyzer (14) effective as a spectrum analyzer and that by increasing the amplitude of said signalling voltage a condition is produced in which the first Bessel line ($J_1$ line) and the second Bessel line ($J_2$ line) have equal amplitude values as is the case for a one-sided phase deviation of 149°, corresponding to a total phase deviation of 298°, and that then for determining said amplitude of said signalling voltage for this maximum a calculation is made back to said voltage for a phase deviation of $\pi$.

13. The method as set forth in claims 8, 9, 11 or 12, **characterized in that** closed loop control of the phase difference is undertaken between said two integrated optical phase modulators (5 and 7).

14. A device for implementing the method as set forth in claim 1, **characterized in that** a laser beam source (1) is connected via a fiber-optic conductor (2) to an input of a first fiber coupler (3), to the one output of which an optical reference branch (6) and to the other output of which an optical measurement branch (4) is connected, that in said optical measurement branch an integrated optical phase modulator being tested (5) and in said optical reference branch a further integrated optical phase modulator (7) is located, that each of said two optical branches is connected at the output end to an input of a second fiber coupler (8), said optical connections being achieved in both branches with fiber-optic conductors, that from a first output of said second fiber coupler the united signal obtained from heterodyning said two branched signals is connected via a fiber-optic conductor to a fast photodetector (12), the electric output signal of which is applied to a network analyzer (14) whose output signal is guided to said integrated optical phase modulator being tested as the controlling modulation signal, that connected to said second output of said second fiber coupler via a fiber-optic conductor is a further photodetector (13), the electric output signal of which is applied to a closed loop controller (15) whose electric output signal is supplied to a control algorithm ensuring that the positioning signal applied to said integrated optical phase modulator (7) in said reference branch assures a constant phase relationship between measurement branch and reference branch.

**15.** The device as set forth in claim 14, **characterized in that** said closed control loop permits compensating a plurality of wavelengths, resetting to a value roughly in the middle of its positioning range when its control range is exceeded in thus continuing smooth control.

**16.** The device as set forth in claim 14, **characterized in that** an optical power meter (17) for measuring back reflections is connected to a second input (16) of said first fiber coupler (3) via a fiber-optic conductor, said input (16) functioning as an output.

**17.** The device as set forth in claim 14 or 15, **characterized in that** in said measurement branch (4) and said reference branch (6) polarization positioners (10;9, 11) for maintaining polarization are inserted in said two branches.

**18.** The device as set forth in any of the claims 14 to 17, **characterized in that** said two fiber connectors (3, 8) are 50:50 fiber X couplers.


**Revendications**

**1.** Procédé d'évaluation qualitative de la dépendance de l'excursion de phase optique d'un modulateur de phase à optique intégrée d'une onde lumineuse, qui traverse un modulateur de phase à optique intégrée (IOPM) et possédant la fréquence de commande et la tension de commande d'un signal de modulation électrique, qui est appliqué à un couple d'électrodes du modulateur de phase à optique intégrée, formé par un cristal optique, et dans lequel l'onde lumineuse, qui est délivrée par une source de rayonnement laser en passant par un guide d'ondes lumineuses, est injectée pour la modulation de phase, **caractérisé en ce que** pour la mesure directe de la réponse en fréquence de l'intensité de modulation de phase du modulateur de phase à optique intégrée (5), l'onde lumineuse, qui est injectée par la source de faisceaux laser (1) dans le guide d'ondes lumineuses (2) est divisée par un premier coupleur à fibre (3) en deux branches, à savoir une branche de référence (6) et une branche de mesure (4), que l'onde lumineuse dans la branche de référence sert d'onde lumineuse de référence et que la phase de l'onde lumineuse dans la branche de mesure traversant le modulateur de phase à optique intégrée à mesurer est modulée, que les deux ondes lumineuses sont à nouveau réunies dans un second coupleur à fibre (8) et sont superposées et que le signal de superposition, qui apparaît sous l'effet de cette réunion et est prélevé sur une première sortie du second coupleur à fibre, est converti par un photodétecteur rapide (5) en un signal électrique, que le modulateur de phase à optique intégrée devant être mesuré est commandé par le signal de sortie, qui forme le signal de modulation, d'un analyseur de réseau (14), dans lequel le signal électrique obtenu par l'intermédiaire du photodétecteur rapide est renvoyé, ce qui a pour effet que la mesure de la réponse en fréquence de l'excursion de phase optique devient possible au moyen de l'établissement de courbes typiques de transmission avec une amplitude et une phase d'excursion de phase en fonction de la fréquence de commande, qu'en plus de l'obtention d'une relation de phase constante entre les deux ondes lumineuses devant être superposées, la phase de l'onde lumineuse circulant dans la seconde branche est réglée, ce pour quoi on utilise un autre photodétecteur (13), qui est raccordé à la seconde sortie de l'autre coupleur à fibre et fournit un signal de capteur électrique pour un régulateur (15), qui pour sa part délivre pour un autre module interne de phase à optique intégrée (16) contenu dans la branche de référence, un signal de réglage utilisé en cet endroit comme signal de modulation, et qu'en outre pour la mesure directe de la tension de commande pour une excursion de phase de 180° du modulateur de phase à optique intégrée on recherche le maximum de l'amplitude détectée du signal, par l'intermédiaire d'une commande du module interne de phase à optique intégrée à mesurer avec un signal période à amplitude variable.

**2.** Procédé selon la revendication 1, **caractérisé en ce que** pour la mesure supplémentaire de la modification, conditionnée par la modulation, de la rétrodispersion optique d'entrée de modulateurs de phase à optique intégrée (6, 7), on mesure la lumière, qui est réfléchie par ces modulateurs, au niveau de l'entrée libre (16) du premier coupleur à fibre (3).

**3.** Procédé selon l'une des revendications 1 ou 2, **caractérisé en ce que** les dispositions pour obtenir une polarisation sont prévues dans la branche de mesure (4) et la branche de référence (6).

**4.** Procédé selon la revendication 3, **caractérisé en ce que** les deux branches (4, 6) sont des ondes lumineuses, qui reçoivent la polarisation, sont prévues dans les deux branches (4, 6).

5. Procédé selon la revendication 3, **caractérisé en ce que** des circuits de réglage de polarisation (9; 10, 11), de préférence en un nombre total égal à trois, assurent dans les deux branches (4; 6) l'obtention de la polarisation.

6. Procédé selon l'une des revendications précédentes, **caractérisé par** l'utilisation d'une source de faisceau laser monomode (1) et de fibres de guides d'ondes optiques monomode.

7. Procédé selon l'une des revendications précédentes, **caractérisé en ce qu'**on utilise comme coupleurs à fibre (3, 8) des coupleurs 50:50 à fibre X.

8. Procédé selon l'une des revendications précédentes, **caractérisé en ce que** le signal de modulation, qui commande le modulateur de phase à optique intégrée (5), est un signal rectangulaire.

9. Procédé selon l'une des revendications 1 à 7 **caractérisé en ce que** le signal de modulation, qui commande le modulateur de phase à optique intégrée (5) pour le modulateur de phase à optique intégrée (5) est un signal triangulaire.

10. Procédé selon la revendication 9, **caractérisé en ce que** le signal de modulation de forme triangulaire possède une basse fréquence d'environ 100 Hz.

11. Procédé selon l'une des revendications 1 à 7, **caractérisé en ce que** pour la mesure de l'excursion de phase du modulateur de phase à optique intégrée (5) on utilise comme fréquence de commande une haute fréquence fixe, qu'on observe le spectre de Bessel avec l'analyseur de réseau (14) qui agit en tant qu'analyseur de spectre, et on détermine au moyen d'un réglage à régime élevé de l'amplitude de la tension de commande, la valeur maximale d'amplitude de la première courbe de Bessel (courbe $J_1$), pour laquelle l'amplitude de la course de l'excursion de phase est égale à 1,8 rad (= 103°) et qu'après la détermination de l'amplitude de la tension de commande pour ce maximum, on effectue une conversion à la tension pour une excursion de phase égale à $\pi$.

12. Procédé selon l'une des revendications 1 à 7, **caractérisé en ce que** pour la mesure de l'excursion de phase du modulateur de phase à optique intégrée (5) on utilise comme fréquence de commande une haute fréquence fixe, qu'avec l'analyse de réseau (14) actif agissant en tant qu'analyse de spectre, on observe le spectre de Bessel et qu'en réglant à une valeur élevée l'amplitude de la tension de commande, on crée un état, dans lequel la première courbe de Bessel (courbe $J_1$) et la seconde courbe de Bessel (courbe $J_2$) possèdent des valeurs d'amplitude identiques, ce qui est le cas pour une excursion de phase unilatérale de 149°, qui correspond à une excursion de phase complète de 198°, et qu'après la détermination de l'amplitude de la tension de commande pour ce maximum, on effectue une conversion par calcul sur la tension pour une excursion de phase égale à $\pi$.

13. Procédé selon les revendications 8, 9, 11 ou 12, **caractérisé en ce qu'**une régulation de la différence de phase est exécutée entre les deux modulateurs de phase à optique intégrée (5, 7).

14. Dispositif pour la mise en oeuvre du procédé selon la revendication 1, **caractérisé en ce qu'**une source de faisceau laser (1) est raccordée par l'intermédiaire d'un guide d'ondes optiques à une entrée d'un premier coupleur à fibre (3) à une sortie duquel est raccordée une branche optique de référence (6) et à l'autre sortie duquel est raccordée une branche de mesure optique (4), que dans la branche de mesure optique, qu'un modulateur de phase à optique intégrée devant être mesuré (5) est situé dans la branche de mesure optique et un autre modulateur de phase à optique intégrée (7) est situé dans la branche optique de référence, que ces deux branches optiques sont reliées côté sortie chacune à une entrée d'un second coupleur de fibre (8), les liaisons optiques dans les deux branches étant réalisées avec des guides d'ondes optiques, que le signal réuni, qui est obtenu au moyen de la superposition de signaux des deux branches, est transmis depuis une première sortie du second coupleur à fibre par l'intermédiaire d'un guide d'ondes lumineuses, à un photodétecteur rapide (12), dont le signal de sortie électrique est envoyé à un analyseur de réseau (14), dont le signal de sortie est envoyé en tant que modulation de commande au modulateur de phase à optique intégrée à mesurer, qu'à la seconde sortie du second coupleur à fibre est raccordé, par l'intermédiaire d'un guide d'ondes lumineuses, un autre photodétecteur (13), dont le signal de sortie électrique est envoyé à un régulateur (15), qui assure, au moyen d'algorithmes de régulation, que le réglage appliqué au modulateur de phase à optique intégrée (7), qui est situé dans la branche de référence, assure une relation de phase constante entre la branche de mesure et la branche de référence.

15. Dispositif selon la revendication 14, **caractérisé en ce que** le circuit de régulation peut régler un multiple de la longueur d'onde, exécute, lors du dépassement de sa plage de régulation, un retour à une valeur approximativement au centre de sa plage de régulation et poursuit la régulation sans interruption parasite du signal.

16. Dispositif selon la revendication 14, **caractérisé en ce qu'**un appareil de mesure de puissance optique (17) servant à mesurer des rétroréflexions est raccordé à la seconde entrée (16), qui assume la fonction d'une sortie, du premier coupleur à fibre (3) par l'intermédiaire d'un guide d'ondes optiques.

17. Dispositif selon la revendication 14 ou 15, **caractérisé en ce que** les circuits (10; 9, 11) de réglage de polarisation servant à obtenir une polarisation dans les deux branches sont branchés dans la branche de mesure (4) et dans la branche de référence (6).

18. Dispositif selon l'une des revendications 14 à 17, **caractérisé en ce que** les deux coupleurs à fibre (3, 8) sont des coupleurs 50:50 à fibre X.

Optisches Signal in Faser
Elektrisches HF-Meßsignal
Elektrisches Regelsignal

Leistungs-meßgerät — 17

Faser-X-Koppler — 3

Laser-Quelle — 1

Polarisations-stellglied — 9

Polarisations-stellglied — 10

Phasenmodula-tor — 7

Phasenmodulator (IOPM) — 5

Netzwerk-Analysator — 14

$A_0 * \sin(2\pi f_0 t)$

$A_1 * \sin(2\pi f_0 t)$

HF-Detektor — 12

schmalband. Detektor — 13

Regler — 15

DC-Offset

Polarisations-stellglied — 11

Faser-X-Koppler — 8

Fig.1

Fig.2

Fig.3

Amplitude der
Spektrallinien
(Besselspektrum)

$J_0$

$J_1$

$J_2$

$J_3$

zum kleinen
Phasenhub
proportionale
$J_1$-Amplitude

höhere Spektrallinien
vernachlässigbar

kleiner
Phasenhub

$\pi/2$

Phasenhub-Amplitude
(entspricht Spannungs-
Amplitude am IOPM-
Eingang)

EP 0 971 256 B1

Fig.4

18

Fig.5a

Fig.5b

Q

I

Q

I

Q

I

detektiertes Signal

detektiertes Signal

detektiertes Signal

Zeit

Zeit

Zeit

Fig.5c

Fig.6

Fig.7